# EUROPEAN PATENT SPECIFICATION

(11) **EP 0 490 446 B1**
(45) Date of publication and mention of the grant of the patent: **11.09.1996**
(21) Application number: 91203215.8
(22) Date of filing: 10.12.1991
(51) Int. Cl.: H04Q 3/00

(54) **Dynamic call routing system**
Dynamisches Leitsystem für Anrufe
Système de routage dynamique d'appels

(30) Priority: 11.12.1990 NL 9002721
(43) Date of publication of application: 17.06.1992
(73) Proprietor: Koninklijke PTT Nederland N.V., NL-2509 CH The Hague (NL)
(72) Inventor: Bezemer, Daniel Bolte, NL-2272 CL Voorburg (NL); Hofstee, Jan Henk Eelse, NL-2665 LA Bleiswijk (NL)

(56) References cited:
- EP-A- 0 291 815
- US-A- 3 536 842
- PROCEEDINGS OF THE FIRST INTERNATIONAL CONFERENCE ON INTELLIGENT NETWORKS 14 March 1989, BORDEAUX (FR) pages 28 - 30; BEZEMER ET AL: 'Controlling grades of service in integrated networks'
- IEEE INTERNATIONAL CONFERENCE ON COMMUNICATIONS - PAPER 1F.1 vol. 1, 13 June 1982, PHILADELPHIA (US) pages 1-5; MASE ET AL: 'Network control system using traffic databases'
- PATENT ABSTRACTS OF JAPAN vol. 9, no. 208 (E-338)(1931) 24 August 1985 & JP-A-60 070 851 (NIPPON DENKI) 22 April 1985
- IEEE MILITARY COMMUNICATIONS CONFERENCE vol. 1, 19 October 1987, WASHINGTON (US) pages 7 - 12; GIFFORD: 'Adaptive routing and traffic control in damaged circuit switched networks'
- IEEE COMMUNICATIONS MAGAZINE vol. 25, no. 9, September 1987, NEW YORK (US) pages 13 - 21; HURLEY ET AL: 'A Survey of Dynamic Routing Methods for Circuit- Switched Traffic'

## Description

### A. BACKGROUND OF THE INVENTION

The invention relates to a transmission system comprising a transmission network for the transmission of transmission signals between peripheral systems connected to said transmission network, in which, prior to such a transmission of transmission signals between a first peripheral system and a second peripheral system, said first peripheral system emits a call code signal to the transmission network, which call code signal comprises a code indicating said second peripheral signal, after which the transmission network or the second peripheral system sends back a 'positive' or 'negative' status code signal, indicating whether said second peripheral system is, or is not, accessible or available, respectively.

Such a system is known from "PROCEEDINGS OF THE FIRST INTERNATIONAL CONFERENCE ON INTELLIGENT NETWORKS", 14 March 1989, Bordeaux (FR), pages 28-30, BEZEMER ET AL: "Controlling grades of services in integrated networks". This document discloses on pages 28-30 a dynamic call gapping method. According to this method a list for "hard-to-reach codes" is filled automatically, with numbers that experience failures. During a relaxation time for each number in the list, all calls to that number are prohibited. The use of such a list is based on the insight that, given a particular total network capacity, serious congestions can largely be combated by preventing a congested point being approached at the source itself, i.e. the network location at which a new connection is initiated. The said peripheral systems may, for example, be subscribers, exchanges or other switching systems, or even (subsidiary) transmission networks. In this last case, the total transmission system is therefore formed by several networks connected together.

This list for "hard-to-reach codes" is a measure which is taken against network congestion in a transmission system as referred to above. The concept of congestion (congested etc.) will be understood below as meaning both the inaccessibility of a particular destination, for example as a consequence of the lack of adequate means, such as transmission channels, in a particular section of the transmission network, and the unavailability of a particular destination, for example as a consequence of the destination (second peripheral system) being busy, out-of-action or damaged. In this connection, congestion is therefore caused both by the called (second) peripheral system itself not being available, and by the transmission network via which the peripheral system to be called cannot be accessed. Incidentally, (in)accessibility can also be understood as meaning (un)availability, since in this case a peripheral system which is, for example, unavailable is in fact also inaccessible to the calling peripheral system, i.e. no information exchange can take place. For said reason, the concept of (in)accessibility will also include the concept of (un)availability.

Hitherto it has been customary in a (large) transmission system when more or less structural congestion has been detected in a section of the network, to subject the traffic handling in such a congested network section manually (by an operator) or semi-automatically (by logging equipment) to a further analysis in order to be able to take appropriate measures such as rerouting particular traffic flows.

### B. SUMMARY OF THE INVENTION

It is an object of the invention, inter alia, to provide a transimssion system as described in the preamble which is more flexible.

The transmission system according to the invention is characterised in that at least one filter device is connected to the first peripheral system and to the transmission network, which filter device comprises means for recording and for storing, during a relaxation time, comparison code signals corresponding to said call code signals emitted by the first peripheral system or to a portion of such a call code signal, in response to which the transmission network has sent back a 'negative' status code signal indicating 'inaccessible' or the called second peripheral system has sent back a 'negative' status code signal indicating 'unavailable', which filter device furthermore comprises means for comparing a call code signal emitted by said first peripheral system with the comparison code signals then recorded and for not transmitting said call code signal in the event of apparent correspondence between said call code signal or a portion thereof and one of said comparison code signals during said comparison, but for transmitting said call code signal in the event of apparent noncorrespondence between said call code signal or a portion thereof and one of said comparison code signals during said comparison, whereby the filter device is adapted for adjusting the relaxation time.

Due to the at least one filter device which records and stores, during the relaxation time, the comparison code signals corresponding to said call code signals emitted by the first peripheral system or to a portion of such a call code signal, in response to which the transmission network has sent back a 'negative' status code signal indicating 'inaccessible' or the called second peripheral system has sent back a 'negative' status code signal indicating 'unavailable', and which filter device compares the call code signal emitted by said first peripheral system with the comparison code signals then recorded, in response to which in the event of the apparent correspondence said call code signal is not transmitted and in the event of apparent noncorrespondence said call code signal is transmitted, and which filter device can adjust the relaxation time, a telecommunication system is provided which is very flexible.

The invention is based on the insight, inter alia, that there should be a relationship between the list for "hard-to-reach codes" (being full or empty) and the congestion (causing large or small problems). According to the invention, at various (important) points in the transmission system at which new connections are initiated, the chosen destinations are therefore automatically subjected to an investigation, viz. as to whether the destination selected in a call is, or is not, accessible or available at that instant ('locking condition investigation'). Such an initiation point and such a destination may both be regarded as peripheral system for the subsidiary network situated in between.

The filter device, by means of which the call code signals are investigated (filtered) for the possible selection of a congested destination (second peripheral system) is not static in nature, but dynamic in the sense that the contents of the filter are automatically filled with the codes of congested destinations under the control of the call codes and/or the status code signals received back in response thereto and in the sense that the relaxation time, during which comparison signals are recorded and stored, can be adapted by the filter device.

Said codes are either derived directly from the call code signals or from the status code signals, if the latter - as will usually be the case - not only indicate the accessibility/availability of the called peripheral system but also indicate which second peripheral signal the (failed) call was intended for. The comparison codes with which the filter is filled can also be formed by error location codes sent back from the transmission network which can be sent concomitantly with the 'negative' status code signals in the event of the inaccessibility of a called destination as a consequence of a congestion at a network location indicated by said error location code.

In particular in a large network it is not readily possible in practice to store congestions which have been detected and the result thereof for the entire network in each dynamic filter. For said reason an embodiment of the telecommunication system according to the invention is characterised by a multiplicity of the said filter devices, each filter device relating to a section of the transmission network, and also by a filter selection device connected, on the one hand, to the first peripheral system and, on the other hand, to each of said filter devices and comprising means for receiving the call code signals emitted by the first peripheral system and, on the basis of such a call code signal, selecting and connecting, to the first peripheral system, the filter device which relates to said section of the transmission network to which the second peripheral system indicated by the call code is connected. For each call, it is therefore determined for which portion of the network the call is destined, after which the call is investigated for a possible congested status of the destination by the (sub)filter assigned to said network portion. Because use is made of subfilters for each subnetwork, the processing time can be kept within acceptable limits.

With respect to the relaxation time ('reset' time) - which has to ensure that the filter does not 'clog up' - there are several options. One of the options in this connection is that the relaxation time (t) assigned to a particular comparison code signal is made the longer, the greater the number of call code signals emitted by the first peripheral system (A) and corresponding to said comparison code signal is. The relaxation time is therefore made the longer, the greater the call pressure for said (congested) destination is. A second option is that the relaxation time (t) assigned to a particular comparison code signal is made the longer, the greater the number of 'negative' status code signals received back after the emission of call code signals corresponding to said comparison code signal from the transmission network (T) or from the second peripheral system (B) is. The relaxation time is restarted, for example, after further reception of 'negative' status code signals (for example as a consequence of sluggishness of the network) after the filter has already been activated as a result of receiving a (first) 'negative' status code signal, as a result of which the total relaxation time is thus increased. A third option is that the relaxation time (t) assigned to a particular comparison code signal is terminated after the receipt of a 'positive' status code signal, indicating that said second peripheral system is available again, from the second peripheral system (B), indicated by the call code signal corresponding to said comparison code signal. In this case, provision is therefore made that the filter is immediately 'reset' as soon as a congestion logged in the filter is over. Under these circumstances it is possible to give the relaxation time a particular value initially and to stop the relaxation time as soon as the second peripheral system is again accessible or available according to a 'positive' status code signal. It is equally possible to terminate the relaxation time exclusively (that is to say, without 'presetting') on receiving back the 'positive' status code signal.

In relation to the recording of congested destinations (ie. the codes thereof) in the filter, this can be done, according to the invention, as soon as it has been signalled (once) that a called destination is congested, but it is also possible, according to the invention, only to record a congested destination in the filter after said destination has been called a number of times (for example, two or three times) and 'unavailable' has been received as status code signal in response thereto. Said 'number of times' may, for that matter, be in the absolute sense or, for example, the number of times for each shorter or longer time period, in other words the short- or long-term average. It may also be another statistical value of the number of times, for example a 'leaky bucket' value thereof.

The invention further relates to a filter device for use in a transmission system comprising a transmission network for the transmission of transmission signals between peripheral systems connected to said transmission network, in which transmission system, prior to such a transmission of transmission signals between a first peripheral system and a second peripheral system, said first peripheral system emits a call code signal to the transmission network, which call code signal comprises a code indicating said second peripheral signal, after which the transmission network or the second peripheral system sends back a 'positive' or 'negative' status code signal, indicating whether said second peripheral system is, or is not, accessible or available, respectively.

It is a further object of the invention, inter alia, to provide a filter device as described above which makes the transmission system more flexible.

The filter device according to the invention is characterised in that the filter device is connectable to the first peripheral system and to the transmission network, which filter device comprises means for recording and for storing, during a relaxation time, comparison code signals corresponding to said call code signals emitted by the first peripheral system or to a portion of such a call code signal, in response to which the transmission network has sent back a 'negative' status code signal indicating 'inaccessible' or the called second peripheral system has sent back a 'negative' status code signal indicating 'unavailable', which filter device furthermore comprises means for comparing a call code signal emitted by said first peripheral system with the comparison code signals then recorded and for not transmitting said call code signal in the event of apparent correspondence between said call code signal or a portion thereof and one of said comparison code signals during said comparison, but for transmitting said call code signal in the event of apparent noncorrespondence between said call code signal or a portion thereof and one of said comparison code signals during said comparison, whereby the filter device is adapted for adjusting the relaxation time.

Due to the filter device which records and stores, during the relaxation time, the comparison code signals corresponding to said call code signals emitted by the first peripheral system or to a portion of such a call code signal, in response to which the transmission network has sent back a 'negative' status code signal indicating 'inaccessible' or the called second peripheral system has sent back a 'negative' status code signal indicating 'unavailable', and which filter device compares the call code signal emitted by said first peripheral system with the comparison code signals then recorded, in response to which in the event of the apparent correspondence said call code signal is not transmitted and in the event of apparent noncorrespondence said call code signal is transmitted, and which filter device can adjust the relaxation time, a telecommunication system is provided which is very flexible.

From "IEEE MILITARY COMMUNICATIONS CONFERENCE", vol. 1, 19 October 1987, Washington, US, pages 7-12, L.F. Gifford: "Adaptive routing and traffic control in damaged circuit switched networks" it is known to provide adaptive routing in damaged circuit switched networks at the hand of a failure detection algorithm which uses local information instead of global information. The transmission system according to the invention and the filter device according to the invention are not known from this reference. Further, there is no incentive in this reference pointing into the direction of the invention.

From EP-A-0 291 815 it is known to provide a method for limiting the traffic flow based on incoming call attempts in a telecommunication system, by releasing a percentage proportion of the incoming call attempts for further processing or subjecting a percentage proportion of the incoming call attempts to a limiting measure for avoiding congestion as determined by the traffic flow. The incoming call attemps are cyclically counted by a counter with adjustable counting volume and, for each counting cycle, on the one hand, in each case at least one first adjustment information item causing an increase in the traffic flow by a respective increment is formed and, on the other hand, in each case at least one counter control information item causing a reduction in the counting volume by a respective count is formed until a minimum value predetermined for the counting volume is reached. In the event of negative results of call attempts released for further processing, on the one hand, in each case a second adjustment information item provided for reducing the traffic flow by a respective decrement is formed, and, on the other hand, in each case at least one resetting information item provided for resetting the counting volume to a predetermined maximum value is formed.

The transmission system according to the invention and the filter device according to the invention are not known from this reference. Further, there is no incentive in this reference pointing into the direction of the invention.

### C. REFERENCES

■ "PROCEEDINGS OF THE FIRST INTERNATIONAL CONFERENCE ON INTELLIGENT NETWORKS", 14 March 1989, Bordeaux (FR), pages 28-30, BEZEMER ET AL: "Controlling grades of services in integrated networks"
■ "IEEE MILITARY COMMUNICATIONS CONFERENCE", vol. 1, 19 October 1987, Washington, US, pages 7-12, L.F. Gifford: "Adaptive routing and traffic control in damaged circuit switched networks"
■ EP-A-0 291 815

### D. EXEMPLARY EMBODIMENTS

### 1. Description of figures

Figure 1 shows a first exemplary embodiment of the invention, in which a first peripheral system is able to make contact with a number of second peripheral systems (of which four are shown) via a filter device comprising a selection device and three subfilters and via a network comprising three subnetworks.

Figure 2 shows an exemplary embodiment of the filter device shown in Figure 1; the filter device is filled from the call code signal side.

Figure 3 shows an exemplary embodiment corresponding to the exemplary embodiment of Figure 2, in which the filter device is filled from the status code signals.

Figure 4 shows a transmission system according to the invention in which the said peripheral systems are formed by (subsidiary) networks - for example a section of the public transmission network, a public telecommunication exchange or a PABX - which can be connected to each other via a (subsidiary) network and in which the said filter devices are incorporated between said (subsidiary) networks.

### 2. Operation

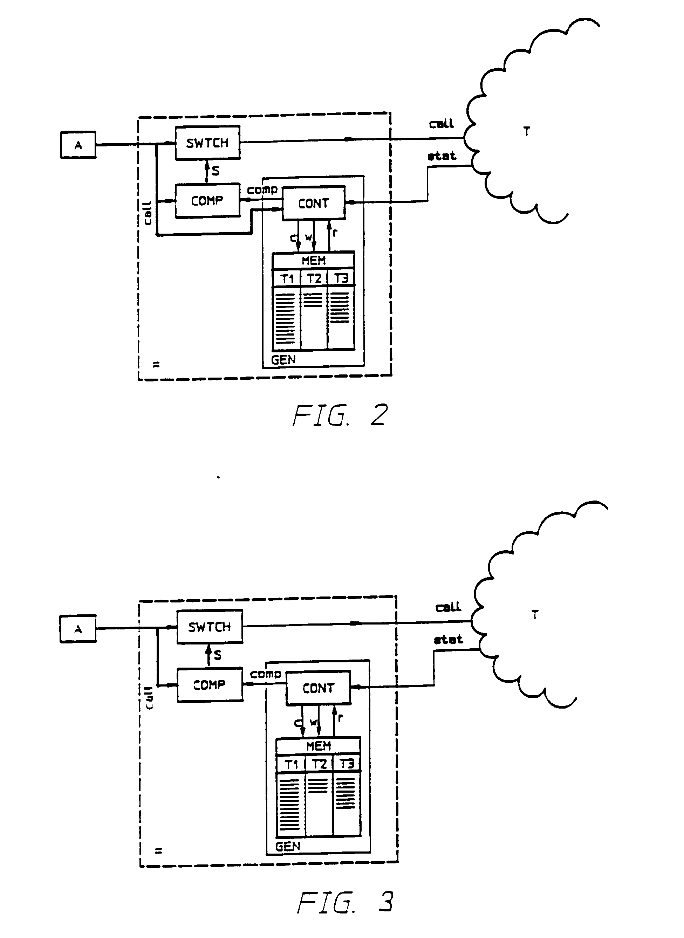

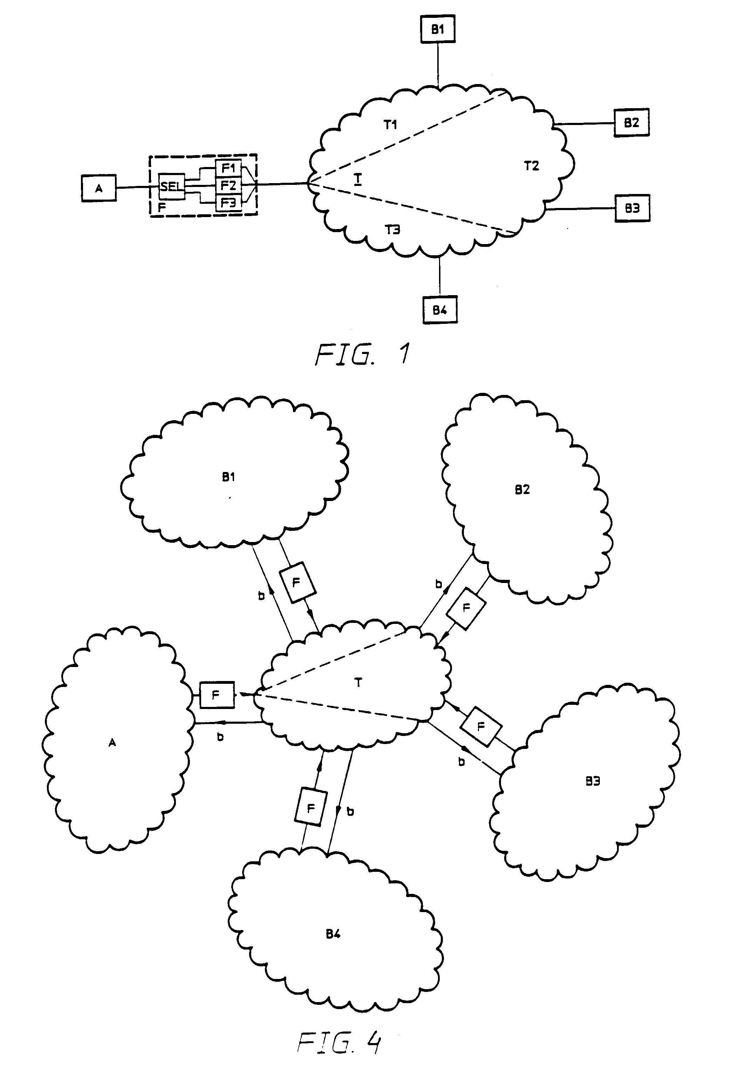

In the exemplary embodiment shown in Figure 1, a periphal system A is connected to a transmission network T via a filter F. Connected to said network T is a (large) number of peripheral systems (B), of which four, B1..4, are shown. The peripheral systems may be formed by subscribers, or small or large subscriber exchanges (PABXs). In dealing with this exemplary embodiment, reference will be made, for the sake of convenience, to 'the subscribers' A, B1, B2,... From the point of view of subscriber A, the network T is (notionally) split into three (subsidiary) networks T1, T2 and T3. All the calls sent out from A pass through the filter (F) in which they are investigated for their destination: if a destination B1, B2,..., represented by a call code signal emitted by A is known to be congested (damaged, busy, out-of-action), the call code signal is held back by the filter. If the destination is not known to be congested, the call code signal is transmitted. When the transmitted call code signal arrives at its destination, for example B2, the latter indicates, by means of a status answerback signal to A, whether the connection can or cannot be implemented for the exchange of speech or data. If, for example, the called subscriber B2 is busy at the instant of the call, the status signal will indicate, by means of a status code signal, that B2 is not available. When such a status code signal is received at the A end, a representation of B2 is recorded in the filter F and stored for a certain (relaxation) time. If a call to B2 is now initiated again from A within the relaxation time (this frequently occurs in practice, particularly if A and B2 both have an exchange function), such a call is held back by the filter F. Said situation is continued until the relaxation time has elapsed. If many calls destined for B2 appear during the relaxation time (and these are therefore all stopped by the filter), it may, according to a preferred embodiment of the invention, be sensible to prolong the relaxation time in accordance with said number of calls. The great advantage of holding back calls in this way which are destined for a subscriber who is known to be unavailable is that the network T does not receive any (avoidable) calls for processing which ultimately do not result in a connection. As a result, the network T is not unnecessarily loaded, as a result of which, for example, (internal) network congestion occurs less rapidly. In addition, the network is not unnecessarily loaded with calls which do not ultimately result in (billable) connections. In the present exemplary embodiment, the filter F comprises a selector SEL and three (sub)filters F1..3. The selector SEL determines on the basis of the call code signal emitted by A the section, T1, T2 or T3, of the network T to which the subscriber B to be called is connected. If said subscriber (B2) is connected to section T2, the call code signal is passed via subfilter F2 to B2. If it appears there that B2 was found to be congested during the previous call and the relaxation time has not yet elapsed, the call to B2 is stopped by F2; if the call code of B2 is not present in F2, the call code signal is then transmitted.

Figure 2 shows a possible implementation of the filter F in Figure 1. The filter F is formed by a switching device SWTCH to which the call code signals originating from A are applied and which does, or does not, connect through said signals to the downstream network T. The switching device SWTCH is controlled by means of a control signal s from a comparator COMP to which the call code signal 'call' and a series of n comparison code signals 'comp' are applied. Said comparator COMP compares the applied 'call' and 'comp' signals. In the event of correspondence, the comparator COMP delivers to the switching device SWTCH a control signal s having a value which brings about the result that the call code signal 'call' is not switched through by the switching device SWTCH; in the event of lack of correspondence between the call code signal 'call' and one of the n comparison code signals 'comp', the control signal s acquires a value which brings about the result that the switching device SWTCH does in fact switch the call code signal through to the network T. The series of comparison code signals 'comp' is generated by a comparison code signal generator GEN.

The generator GEN shown in Figure 2 is formed by a memory device MEM and a control device CONT which controls the memory device with the aid of a control code signal c. The two most important tasks of the control device CONT are, on one hand, causing the contents of the memory MEM to be read out in the event of a call from A and causing a call code to be written into said memory if it is found that the destination (B) indicated by said call code is not available. The memory device MEM comprises three memories, indicated by T1..3 in which the call codes of the destinations B in the network portions T1..3 which are unavailable are recorded.

After A sends out a call code signal intended for a particular destination B, said code signal 'call' is applied to the comparator COMP and also to the control device CONT which determines, for example on the basis of the first two or three code elements (bytes) of said code signal, the section of the network, T1, T2 or T3, for which the call is destined (to which section the subscriber B to be called is connected), for example the network section T2. The contents of the submemory 'T2' are then read out ('R'), the codes recorded therein at that instant being transmitted as comparison code signals 'comp' to the comparator COMP, which compares them with the call code signal. It is pointed out that for the purpose of a correct 'timing', it will be necessary to incorporate memory buffers in the circuit on either side of the comparator COMP for the purpose of temporarily storing the codes 'call' and 'comp'; said buffers are, however, not shown in the figure for the sake of clarity. The same applies to the control device CONT, to which the applied signals 'call' and 'stat' (to be discussed below) will also have to be temporarily buffered.

If it is found, after comparison in the comparator COMP, that the call code does not occur in the (sub)memory MEM(T2), the call code signal 'call' is sent through to the network T(2) by the switching device SWTCH, after which it arrives at its destination B(2). If said destination is available, this is signalled by means of a 'positive' status code signal 'stat' which is sent back to the calling subscriber A, after which the connection between A and B is implemented. If, however, the called subscriber B is not available (for example busy as a result of a connection to another subscriber), a 'negative' status code signal ('unavailable') is sent back. On receipt of such a 'negative' status code signal - the status code signal 'stat' is applied to the control device CONT - the control device CONT is activated in order to write ('W') the call code signal to which the negative status code signal 'stat' relates into the memory device MEM. In the event of a subsequent call from A, said last call code, which was after all destined for a destination found to be 'unavailable' will therefore also be used as comparison code 'comp'.

Each of the comparison codes recorded in the memory device MEM remains there only for a certain time, the so-called relaxation time, after the expiry of which the relevant code is erased. After the expiry of the relaxation time of a comparison code written into the memory device, the respective destination B does not, of course, have to be available again. In that case, after said destination B has been called from A and B has (again) sent back a 'negative' status code signal, the call code for the unavailable destination is again written into the memory device MEM.

The relaxation time may be permanently set, but it is also possible to prolong it in the event of a large number of calls to the unavailable destination. This prevents the network being loaded with a relatively large number of 'stray' calls after the relaxation time has elapsed. Because it always takes some time until the status code signal is received back after a call has been emitted to a particular destination, it may happen that, after it has been found as a result of receiving a 'negative' status code signal that the respective destination is congested, still more 'negative' status code signals are received, viz. as a response to call code signals which were still under way in the network. Preferably, the relaxation time will be 'reset' on receiving each of said 'negative' status code signals still received, as a result of which the total relaxation time is therefore prolonged. Conversely, it is also possible to stop the relaxation time (or at least shorten it) as soon as it is found, by means of a 'positive' status signal, that the respective destination B has become available. This prevents calls from not being transmitted (by SWTCH) in fact wrongly while the destination to be called is in fact available. Both the mechanisms mentioned above for influencing the length of the relaxation time can be operative at the same time. Finally, the filter F can be so designed that the switching device SWTCH does in fact transmit a call code signal, for example, the first time a corresponding comparison code occurs in the memory device MEM, when the call code signal should not be transmitted by SWTCH, but does not do so a second and subsequent time. The threshold should also be capable of being set at a greater number of calls than two. This variant prevents call code signals not being transmitted while their destination is nevertheless available once again when they reach it; this situation may occur in relatively sluggish signalling networks, as a consequence of which the adjustment of the filter F, viz. the 'resetting' of the contents of the memory device MEM, lags too far behind the actual state. However, to design this variant it is necessary to incorporate a counting device with memory and comparison means between the comparison device COMP and the switch device SWTCH, which counting device then counts the number of times that a corresponding comparison code has been found for a call code and which activates the switching device SWTCH, by means of the control signal s, so as not to transmit the call code signal as soon as the number of counted cases of correspondence between said call code and a comparison code goes above a set threshold.

Figure 3 shows the same exemplary embodiment of the filter device as shown in Figure 2, but the filter F, i.e. the memory device MEM is filled from the status code signals received back insofar as the latter are 'negative'. The status code signals (stat) comprise, in said exemplary embodiment, a code, corresponding to the call code (call), which represent the called second peripheral systems B. It is also possible that the ('negative') status code signals comprise a code of the intermediate destination in the transmission network T, at which said network T has detected that the called second peripheral system B was not accessible, in other words an error location code. In the exemplary embodiment shown in this figure, the comparison codes recorded in the memory device MEM are therefore always formed by a section of the ('negative') status code signal representing the called destination (not accessible or available) or intermediate destination (for example, in the telephone number 050-8, the first section (050) represents an intermediate destination, viz. the exchange of the town of Groningen and the second section (8) the final destination, viz. the PABX of PTT Nederland. Just as in the preceding exemplary embodiment, all the call code signals (call) emitted by the first peripheral system A are compared with the comparison codes recorded in the memory device MEM (but now therefore derived from the 'negative' status code signals).

With respect to the sequence of the comparison codes recorded in the (sub)filters F, it is pointed out that these will usually be recorded in time sequence, but the codes chronologically recorded in this way will preferably have to remain written in in their sequence sorted according to time of 'arrival'. In that way, the result is achieved that, provided the relaxation time of all the codes is equally long (!), only the comparison code written in earliest among the comparison codes written in will need to be monitored since the relaxation time of said code will have approached its reset instance the most closely. An advantage is therefore a simple monitoring of the relaxation times; a disadvantage is that the variable relaxation time options as indicated above cannot readily be used in this case.

Figure 4 shows a transmission system comprising several transmission networks A, T, B1, B2, B3 and B4, which are connected to each other and form a large transmission network. The networks A and B1..4 can be regarded as peripheral systems of the network T. Incorporated between each of the networks is a filter device F which brings about the result that calls from a 'peripheral' network A, B1..3 to a destination network A, B1..3 do not reach said transmission network T, and therefore do not reach the intended destination network either, in the event of (known) congestion in the respective destination network A, B1..3 or in the network T situated in between. A filter F is incorporated not only between A and T, but also between B1 and T, B2 and T, B3 and T and B4 and T. Each of said networks B1, B2, B3 and B4 can, after all, function not only as a destination for calls, but also as a source of calls. Each call is therefore passed via a filter F from each network A, B1, B2, B3 and B4. Calls which are received from other networks are applied to the 'destination' network via a 'bypass' b. The dynamic call filters F, which all function in the same way as was described above in relation to the filter F between A and T, may be incorporated not only between the networks B1 and T, B2 and T, B3 and T and B4 and T, but also mutually between the networks A, B1, B2, B3 and B4.

## Claims

1. Transmission system comprising a transmission network (T) for the transmission of transmission signals between peripheral systems (A,B1,B2,B3,B4) connected to said transmission network (T), in which, prior to such a transmission of transmission signals between a first peripheral system (A) and a second peripheral system (B1,B2,B3,B4), said first peripheral system (A) emits a call code signal (call) to the transmission network (T), which call code signal (call) comprises a code indicating said second peripheral signal (B1,B2,B3,B4), after which the transmission network (T) or the second peripheral system (B1,B2,B3,B4) sends back a 'positive' or 'negative' status code signal, indicating whether said second peripheral system (B1,B2,B3,B4) is, or is not, accessible or available, respectively, characterised in that at least one filter device (F) is connected to the first peripheral system (A) and to the transmission network (T), which filter device (F) comprises means for recording (CONT) and for storing (MEM), during a relaxation time, comparison code signals (comp) corresponding to said call code signals (call) emitted by the first peripheral system (A) or to a portion of such a call code signal (call), in response to which the transmission network (T) has sent back a 'negative' status code signal indicating 'inaccessible' or the called second peripheral system (B1,B2,B3,B4) has sent back a 'negative' status code signal indicating 'unavailable', which filter device (F) furthermore comprises means (COMP) for comparing a call code signal (call) emitted by said first peripheral system (A) with the comparison code signals (comp) then recorded and for not transmitting said call code signal (call) in the event of apparent correspondence between said call code signal (call) or a portion thereof and one of said comparison code signals (comp) during said comparison, but for transmitting said call code signal (call) in the event of apparent noncorrespondence between said call code signal (call) or a portion thereof and one of said comparison code signals (comp) during said comparison, whereby the filter device (F) is adapted for adjusting the relaxation time.

2. Transmission system according to Claim 1, characterised by a multiplicity of the said filter devices (F1,F2,F3), each filter device (F1,F2,F3) relating to a section (T1,T2,T3) of the transmission network (T), and also by a filter selection device (SEL) connected, on the one hand, to the first peripheral system (A) and, on the other hand, to each of said filter devices (F1,F2,F3) and comprising means for receiving the call code signals (call) emitted by the first peripheral system (A) and, on the basis of such a call code signal (call), selecting and connecting, to the first peripheral system (A), the filter device (F1,F2,F3) which relates to said section of the transmission network (T1,T2,T3) to which the second peripheral system (B1,B2,B3,B4) indicated by the call code signal (call) is connected.

3. Transmission system according to Claim 1 or 2, characterised in that the relaxation time (t) assigned to a particular comparison code signal (comp) is made the longer, the greater the number of call code signals (call) emitted by the first peripheral system (A) and corresponding to said comparison code signal (comp) is.

4. Transmission system according to Claim 1 or 2, characterised in that the relaxation time (t) assigned to a particular comparison code signal (comp) is made longer, the greater the number of 'negative' status code signals received back, after the emission of call code signals (call) corresponding to said comparison code signal (comp), from the transmission network (T) or from the second peripheral system (B1,B2,B3,B4) is.

5. Transmission system according to Claim 1 or 2, characterised in that the relaxation time (t) assigned to a particular comparison code signal (comp) is terminated after the receipt of a 'positive' status code signal, indicating that the second peripheral system (B1,B2,B3,B4) is available again, from the second peripheral system (B1,B2,B3,B4), indicated by the call code signal (call) corresponding to said comparison code signal (comp).

6. Transmission system according to Claim 1 or 2, characterised in that at least one filter device (F,F1,F2,F3) records comparison code signals (comp) which correspond to call code signals (call) emitted by the first peripheral system (A), in response to which a 'negative' status code indicating 'inaccessible' or 'unavailable' has been received back a particular number of times from the transmission network (T) or from the called second peripheral systems (B1,B2,B3,B4) during a certain detection time.

7. Transmission system according to Claim 6, characterised in that the said detection time is equal to the said relaxation time (t).

8. Transmission system according to Claim 1 or 2, characterised in that the status code signals sent back contain not only an indication relating to the accessibility or availability of the called second peripheral system (B1,B2,B3,B4), but also a code corresponding to the respective call code signal (call), and in that said code is recorded in at least one filter device (F,F1,F2,F3) as comparison code in the event of the inaccessibility or unavailability of the called second peripheral system (B1,B2,B3,B4).

9. Transmission system according to Claim 1 or 2, characterised in that the status code signals sent back contain not only an indication relating to the accessibility or availability of the called second peripheral system but also, in the event of a 'negative' status code signal, an error location code indicating the location in the transmission network (T) or second peripheral system (B1,B2,B3,B4), from which the 'negative' status code signal is sent back, and in that said error location code is recorded in at least one filter device (F,F1,F2,F3) as comparison code.

10. Transmission system according to Claim 1 or 2, characterised in that the comparison code signals (comp) are stored in at least one filter device (F,F1,F2,F3) in their chronological sequence of recording in said filter device (F,F1,F2,F3).

11. Transmission system according to Claim 1 or 2, characterised in that at least one filter device (F,F1,F2,F3) is provided with
- a switching device (SWTCH) connected to the first peripheral system (A) and to the transmission network (T) and comprising means for transmitting, or not transmitting, a call code signal (call) from the first peripheral system (A) to the transmission network (T) under the control of a switching control signal (s);
- a comparison code signal generator (GEN) which comprises the means for recording (CONT) as comparison code signals (comp) and storing (MEM), during a relaxation time (t) comparison codes which correspond to said call codes sent to said second peripheral systems (B1,B2,B3,B4) or to a section of such a call code, in response to which a 'negative' status code signal indicating 'inaccessible' or 'unavailable' has been received back from the transmission network (T) or from the called second peripheral system (B1,B2,B3,B4), which comparison code signal generator (GEN) furthermore comprises means for generating the then recorded comparison code signals (comp) when a call code signal (call) is emitted by the first peripheral system (A);
- a comparison device connected to the first peripheral system (A), to the comparison code signal generator (GEN) and to the switching device (SWTCH), and comprising the means (COMP) for comparing the call code signal (call) originating from the first peripheral system (A) with the comparison code signals (comp) generated by the comparison code signal generator (GEN), and also means for generating the said switch control signal (s) with a value such that the call code signal (call) originating from the first peripheral system (A) is not transmitted by the switching device (SWTCH) if the call code signal (call) corresponds fully or partially to one of said comparison code signals (comp) and that said call code signal (call) is in fact transmitted if the call code signal (call) does not correspond to one of the comparison code signals (comp).

12. Filter device (F) for use in a transmission system comprising a transmission network (T) for the transmission of transmission signals between peripheral systems (A,B1,B2,B3,B4) connected to said transmission network (T), in which transmission system, prior to such a transmission of transmission signals between a first peripheral system (A) and a second peripheral system (B1,B2,B3,B4), said first peripheral system (A) emits a call code signal (call) to the transmission network (T), which call code signal (call) comprises a code indicating said second peripheral signal (B1,B2,B3,B4), after which the transmission network (T) or the second peripheral system (B1,B2,B3,B4) sends back a 'positive' or 'negative' status code signal, indicating whether said second peripheral system (B1,B2,B3,B4) is, or is not, accessible or available, respectively, characterised in that the filter device (F) is connectable to the first peripheral system (A) and to the transmission network (T), which filter device (F) comprises means (MEM) for recording and for storing, during a relaxation time, comparison code signals (comp) corresponding to said call code signals (call) emitted by the first peripheral system (A) or to a portion of such a call code signal (call), in response to which the transmission network (T) has sent back a 'negative' status code signal indicating 'inaccessible' or the called second peripheral system (B1,B2,B3,B4) has sent back a 'negative' status code signal indicating 'unavailable', which filter device (F) furthermore comprises means (COMP) for comparing a call code signal (call) emitted by said first peripheral system (A) with the comparison code signals (comp) then recorded and for not transmitting said call code signal (call) in the event of apparent correspondence between said call code signal (call) or a portion thereof and one of said comparison code signals (comp) during said comparison, but for transmitting said call code signal (call) in the event of apparent noncorrespondence between said call code signal or a portion thereof and one of said comparison code signals (call) during said comparison, whereby the filter device (F) is adapted for adjusting the relaxation time.

13. Filter device (F) according to Claim 12, characterised by a multiplicity of the said filter devices (F1,F2,F3), each filter device (F1,F2,F3) relating to a section (T1,T2,T3) of the transmission network (T), and also by a filter selection device (SEL) connectable, on the one hand, to the first peripheral system (A) and connected, on the other hand, to each of said filter devices (F1,F2,F3) and comprising means for receiving the call code signals (call) emitted by the first peripheral system (A) and, on the basis of such a call code signal (call), selecting and connecting, to the first peripheral system (A), the filter device (F1,F2,F3) which relates to said section of the transmission network (T1,T2,T3) to which the second peripheral system (B1,B2,B3,B4) indicated by the call code signal (call) is connected.

14. Filter device (F) according to Claim 12 or 13, characterised in that at least one filter device (F,F1,F2,F3) is provided with
- a switching device (SWTCH) connectable to the first peripheral system (A) and to the transmission network (T) and comprising means for transmitting, or not transmitting, a call code signal (call) from the first peripheral system (A) to the transmission network (T) under the control of a switching control signal (s);
- a comparison code signal generator (GEN) which comprises the means for recording (CONT) as comparison code signals (comp) and storing (MEM), during a relaxation time (t) comparison codes which correspond to said call codes sent to said second peripheral systems (B1,B2,B3,B4) or to a section of such a call code, in response to which a 'negative' status code signal indicating 'inaccessible' or 'unavailable' has been received back from the transmission network (T) or from the called second peripheral system (B1,B2,B3,B4), which comparison code signal generator (GEN) furthermore comprises means for generating the then recorded comparison code signals (comp) when a call code signal (call) is emitted by the first peripheral system (A);
- a comparison device connectable to the first peripheral system (A), and connected to the comparison code signal generator (GEN) and to the switching device (SWTCH), and comprising the means (COMP) for comparing the call code signal (call) originating from the first peripheral system (A) with the comparison code signals (comp) generated by the comparison code signal generator (GEN), and also means for generating the said switch control signal (s) with a value such that the call code signal (call) originating from the first peripheral system (A) is not transmitted by the switching device (SWTCH) if the call code signal (call) corresponds fully or partially to one of said comparison code signals (comp) and that said call code signal (call) is in fact transmitted if the call code signal (call) does not correspond to one of the comparison code signals (comp).

## Patentansprüche

1. Übertragungssystem, umfassend ein Übertragungsnetzwerk (T) zum Übertragen von Übertragungssignalen zwischen peripheren Systemen (A,B1,B2,B3,B4), die mit diesem Übertragungsnetzwerk (T) verbunden sind, bei dem, vor einer solchen Übertragung von Übertragungssignalen zwischen einem ersten peripheren System (A) und einem zweiten peripheren System (B1,B2,B3,B4), dieses erste periphere System (A) ein Anrufcodesignal (call) an das Übertragungsnetzwerk (T) sendet, wobei dieses Anrufcodesignal (call) einen Code umfasst, der dieses zweite periphere Signal (B1,B2,B3,B4) anzeigt, worauf das Übertragungsnetzwerk (T) oder das zweite periphere System (B1,B2,B3,B4) ein "positives" oder "negatives" Statuscodesignal zurücksendet, das anzeigt, ob dieses zweite periphere System (B1,B2,B3,B4) zugänglich bzw. verfügbar ist oder nicht, **dadurch gekennzeichnet**, dass mindestens eine Filtervorrichtung (F) mit dem ersten peripheren System (A) und dem Übertragungsnetzwerk (T) verbunden ist, wobei diese Filtervorrichtung (F) Mittel umfasst zum Aufzeichnen (CONT) und Speichern (MEM), während einer Ruhezeit, von Vergleichscodesignalen (comp), die diesen Anrufcodesignalen (call), die vom ersten peripheren System (A) gesendet wurden, oder einem Teil eines solchen Anrufcodesignals (call) entsprechen, worauf das Übertragungsnetzwerk (T) als Reaktion ein "negatives" Statuscodesignal zurückgesendet hat, das "unzugänglich" anzeigte, oder das zweite periphere System (B1,B2,B3,B4) hat ein "negatives" Statuscodesignal zurückgesendet, das "nichtverfüqbar" anzeigte, wobei diese Filtervorrichtung (F) weiter Mittel (COMP) umfasst zum Vergleichen eines von diesem ersten peripheren System (A) gesendeten Anrufcodesignals (call) mit den dann aufgezeichneten Vergleichscodesignalen (comp), und zum Nichtübertragen dieses Anrufcodesignals (call) im Fall einer offensichtlichen Entsprechung zwischen diesem Anrufcodesignal (call) oder einem Teil davon und einem dieser Vergleichscodesignalen (comp) während dieses Vergleichs, aber zum Übertragen dieses Anrufcodesignals (call) im Fall einer offensichtlichen Nicht-Entsprechung zwischen diesem Anrufcodesignal (call) oder einem Teil davon und einem dieser Vergleichscodesignalen (comp) während dieses Vergleichs, wobei die Filtervorrichtung (F) ausgebildet ist, um die Ruhezeit einzustellen.

2. Übertragungssystem nach Anspruch 1, **gekennzeichnet durch** eine Vielzahl dieser Filtervorrichtungen (F1,F2,F3), wobei sich jede Filtervorrichtung (F1,F2,F3) auf einen Abschnitt (T1,T2,T3) des Übertragungsnetzwerks (T) bezieht, und ebenfalls durch eine Filterauswählvorrichtung (SEL), die einerseits mit dem ersten peripheren System (A) und andererseits mit jedem dieser Filtervorrichtungen (F1,F2,F3) verbunden ist und Mittel umfasst zum Empfangen der vom ersten peripheren System (A) gesendeten Anrufcodesignale (call) und, auf der Basis eines solchen Anrufcodesignals (call), zum Auswählen und Verbinden, mit dem ersten peripheren System (A), der Filtervorrichtung (F1,F2,F3), die sich auf diesen Abschnitt des Übertragungsnetzwerks (T1,T2,T3) bezieht, mit dem das zweite periphere System (B1,B2,B3,B4), das durch das Anrufcodesignal (call) angezeigt wird, verbunden ist.

3. Übertragungssystem nach Anspruch 1 oder 2, **dadurch gekennzeichnet**, dass die Ruhezeit (t), die einem bestimmten Vergleichscodesignal (comp) zugeordnet ist, desto mehr verlängert wird, je grösser die Anzahl Anrufcodesignale (call) ist, die vom ersten peripheren System (A) gesendet wird und diesem Vergleichscodesignal (comp) entsprechen.

4. Übertragungssystem nach Anspruch 1 oder 2, **dadurch gekennzeichnet**, dass die Ruhezeit (t), die einem bestimmten Vergleichscodesignal (comp) zugeordnet ist, desto mehr verlängert wird, je grösser die Anzal "negativer" Statuscodesignale ist, die nach dem Senden von Anrufcodesignalen (call), die diesem Vergleichscodesignal (comp) entsprechen, vom Übertragungsnetzwerk (T) oder vom zweiten peripheren System (B1,B2,B3,B4) zurückerhalten werden.

5. Übertragungssystem nach Anspruch 1 oder 2, **dadurch gekennzeichnet**, dass die Ruhezeit (t), die einem bestimmten Vergleichscodesignal (comp) zugeordnet ist, beendet wird nach dem Empfang eines "positiven" Statuscodesignals, das angibt, dass das zweite periphere System (B1,B2,B3,B4) wieder verfügbar ist, vom zweiten peripheren System (B1,B2,B3,B4), das durch das Anrufcodesignal (call) angezeigt wird, das diesem Vergleichscodesignal entspricht.

6. Übertragungssystem nach Anspruch 1 oder 2, **dadurch gekennzeichnet**, dass mindestens eine Filtervorrichtung (F1,F2,F3) Vergleichscodesignale (comp) aufzeichnet, die den Anrufcodesignalen (call) entsprechen, die vom ersten peripheren System (A) gesendet wurden, worauf als Reaktion ein "negatives" Statuscodesignal, das "unzugänglich" oder "nichtverfügbar" anzeigte, vom Übertragungsnetzwerk (T) oder von den angerufenen zweiten peripheren Systemen (B1,B2,B3,B4) während einer bestimmten Feststellzeit eine bestimmte Anzahl Male zurückerhalten wurde.

7. Übertragungssystem nach Anspruch 6, **dadurch gekennzeichnet,** dass diese Feststellzeit gleich dieser Ruhezeit (t) ist.

8. Übertragungssystem nach Anspruch 1 oder 2, **dadurch gekennzeichnet**, dass die zurückgesendeten Statuscodesignale nicht nur eine Indikation bezüglich der Zugänglichkeit oder Verfügbarkeit des angerufenen zweiten peripheren Systems (B1,B2,B3,B4) enthalten, sondern ebenfalls einen Code, der dem betreffenden Anrufcodesignal (call) entspricht, und dass dieser Code in mindestens einer Filtervorrichtung (F1,F2,F3) als Vergleichscode gespeichert wird, falls das angerufene zweite periphere System (B1,B2,B3,B4) unzugänglich oder nichtverfügbar ist.

9. Übertragungssystem nach Anspruch 1 oder 2, **dadurch gekennzeichnet**, dass die zurückgesendeten Statuscodesignale nicht nur eine Indikation bezüglich der Zugänglichkeit oder Verfügbarkeit des angerufenen zweiten peripheren Systems enthalten, sondern ebenfalls, im Fall eines "negativen" Statuscodesignals, einen Fehlerortcode, der den Ort im Übertragungsnetzwerk (T) oder im zweiten peripheren System (B1,B2,B3,B4) bezeichnet, von dem das "negative" Statuscodesignal zurückgesendet wurde, und dass dieser Fehlerortcode in mindestens einer der Filtervorrichtungen (F,F1,F2,F3) als Vergleichscode aufgezeichnet wird.

10. Übertragungssystem nach Anspruch 1 oder 2, **dadurch gekennzeichnet**, dass die Vergleichscodesignale (comp) in mindestens einer Filtervorrichtung (F,F1,F2,F3) in ihrer chronologischen Aufzeichnungsreihenfolge in dieser Filtervorrichtung (F,F1,F2, F3) gespeichert werden.

11. Übertragungsnetzwerk nach Anspruch 1 oder 2, **dadurch gekennzeichnet**, dass mindestens eine Filtervorrichtung (F,F1,F2, F3) versehen ist mit:
- einer Schaltvorrichtung (SWTCH), die mit dem ersten peripheren System (A) und mit dem Übertragungsnetzwerk (T) verbunden ist, umfassend Mittel zum Übertragen oder Nichtübertragen eines Anrufcodesignals (call) vom ersten peripheren System (A) zum Übertragungsnetzwerk (T) unter Steuerung eines Schaltsteuersignals (s);
- einem Vergleichscodesignal-Generator (GEN), umfassend Mittel zum Aufzeichnen (CONT) als Vergleichscodesignale (comp) und zum Speichern (MEM), während der Ruhezeit (t), von Vergleichscodes, die diesen Anrufcodes entsprechen, die an dieses zweite periphere System (B1,B2,B3,B4) oder an einen Teil von einem solchen Anrufcode gesendet wurden, worauf als Reaktion ein "negatives" Statuscodesignal, das "unzugänglich" oder "nichtverfügbar" anzeigte, vom Übertragungsnetzwerk (T) oder vom angerufenen zweiten peripheren System (B1,B2,B3,B4) zurückerhalten wurde, wobei dieser Vergleichscodesignal-Generator (GEN) weiter Mittel zum Erzeugen der dann aufgezeichneten Vergleichscodesignale (comp) umfasst, wenn ein Anrufcodesignal (call) vom ersten peripheren System (A) gesendet wird;
- einer Vergleichsvorrichtung, die mit dem ersten peripheren System (A), mit dem Vergleichscodesignal-Generator (GEN) und mit der Schaltvorrichtung (SWTCH) verbunden ist, und Mittel (COMP) umfasst zum Vergleichen der Anrufcodesignale (call), die vom ersten peripheren System (A) herstammen, mit den Vergleichscodesignalen (comp), die vom Vergleichscodesignal-Generator (GEN) erzeugt wurden, und ebenfalls Mittel zum Erzeugen dieser Schaltsteuersignale (s) mit einem derartigen Wert, dass das Anrufcodesignal (call), das vom ersten peripheren System (A) herstammt, von der Schaltvorrichtung (SWTCH) nicht übertragen wird, wenn das Anrufcodesignal (call) ganz oder teilweise einem dieser Vergleichscodesignale (comp) entspricht, und dass dieses Anrufcodesignal (call) tatsächlich übertragen wird, wenn das Anrufcodesignal (call) keinem der Vergleichscodesignalen (comp) entspricht.

12. Filtervorrichtung (F) zur Anwendung in einem Übertragungssystem, umfassend ein Übertragungsnetzwerk (T) zum Übertragen von Übertragungssignalen zwischen peripheren Systemen (A,B1,B2,B3,B4), die mit diesem Übertragungsnetzwerk (T) verbunden sind, wobei in diesem Übertragungssystem, vor einer solchen Übertragung von Übertragungssignalen zwischen einem ersten peripheren System (A) und einem zweiten peripheren System (B1,B2,B3,B4), dieses erste periphere System (A) ein Anrufcodesignal (call) an das Übertragungsnetzwerk (T) sendet, wobei dieses Anrufcodesignal (call) einen Code umfasst, der dieses zweite periphere Signal (B1,B2,B3,B4) bezeichnet, worauf das Übertragungsnetzwerk (T) oder das zweite periphere System (B1,B2,B3,B4) ein "positives" oder "negatives" Statuscodesignal zurücksendet, das angibt, ob dieses zweite periphere System (B1,B2,B3,B4) zugänglich bzw. verfügbar ist oder nicht, **dadurch gekennzeichnet**, dass die Filtervorrichtung (F) mit dem ersten peripheren System (A) und mit dem Übertragungsnetzwerk (T) verbindbar ist, wobei diese Filtervorrichtung (F) Mittel (MEM) umfasst zum Aufzeichnen und Speichern, während einer Ruhezeit, von Vergleichscodesignalen (comp), die diesen Anrufcodesignalen (call), die vom ersten peripheren System (A) gesendet wurden, oder einem Teil eines solchen Anrufcodesignals (call) entsprechen, worauf das Netzwerk (T) als Reaktion ein "negatives" Statuscodesignal zurückgesendet hat, das "unzugänglich" anzeigte, oder worauf das zweite periphere System (B1,B2,B3,B4) ein "negatives" Statuscodesignal zurückgesendet hat, das "nichtverfügbar" anzeigte, wobei diese Filtervorrichtung (F) weiter Mittel (COMP) umfasst zum Vergleichen eines Anrufcodesignals (call), das von diesem ersten peripheren System (A) gesendet wurde, mit den dann aufgezeichneten Vergleichscodesignalen (comp), und zum Nichtübertragen dieses Anrufcodesignals (call), im Fall einer offensichtlichen Entsprechung zwischen diesem Anrufcodesignal (call) oder einem Teil davon und einem von diesen Vergleichscodesignalen (comp) während dieses Vergleichs, aber zum Übertragen dieses Anrufcodesignals (call), im Fall einer offensichtlichen Nicht-Entsprechung zwischen diesem Anrufcodesignal oder einem Teil davon und einem dieser Vergleichscodesignalen (call) während dieses Vergleichs, wobei die Filtervorrichtung (F) ausgebildet ist, um die Ruhezeit einzustellen.

13. Filtervorrichtung (F) nach Anspruch 12, **gekennzeichnet durch** eine Vielzahl dieser Filtervorrichtungen (F1,F2,F3), wobei sich jede Filtervorrichtung (F1,F2,F3) auf einen Abschnitt (T1,T2,T3) des Übertragungsnetzwerks (T) bezieht, und ebenfalls durch eine Filterauswählvorrichtung (SEL), die einerseits mit dem ersten peripheren System (A) verbindbar und andererseits mit jeder dieser Filtervorrichtungen (F1,F2,F3) verbunden ist und Mittel umfasst zum Empfangen der Anrufcodesignale (call), die vom ersten peripheren System (A) gesendet wurden und, auf der Basis eines solchen Anrufcodesignals (call), zum Auswählen und Verbinden, mit dem ersten peripheren System (A), der Filtervorrichtung (F1,F2,F3), die sich auf diesen Abschnitt des Übertragungsnetzwerks (T1,T2,T3) bezieht, mit dem das zweite periphere System (B1,B2,B3,B4), das durch das Anrufcodesignal (call) bezeichnet wird, verbunden ist.

14. Filtervorrichtung (F) nach Anspruch 12 oder 13, **dadurch gekennzeichnet**, dass mindestens eine Filtervorrichtung (F,F1,F2, F3) vorgesehen ist mit:
- einer Schaltvorrichtung (SWTCH), die mit dem ersten peripheren System (A) und mit dem Übertragungsnetzwerk (T) verbindbar ist und Mittel umfasst zum Übertragen oder Nichtübertragen eines Anrufcodesignals (call) vom ersten peripheren System (A) zum Übertragungsnetzwerk (T) unter Steuerung eines Schaltsteuersignals (s);
- einem Vergleichscodesignal-Generator (GEN), umfassend die Mittel zum Aufzeichnen (CONT) als Vergleichscodesignale (comp) und zum Speichern (MEM), während einer Ruhezeit (t), von Vergleichscodes, die diesen Anrufcodes entsprechen, die an diese zweiten peripheren Systeme (B1,B2,B3,B4) oder einem Abschnitt eines solchen Anrufcode gesendet wurden, worauf als Reaktion ein "negatives" Statuscodesignal, das "unzugänglich" oder "nichtverfügbar" anzeigte, vom Übertragungsnetzwerk (T) oder vom angerufenen zweiten peripheren System (B1,B2,B3,B4) zurückerhalten wurde, wobei dieser Vergleichscodesignal-Generator (GEN) weiter Mittel zum Erzeugen der dann aufgezeichneten Vergleichscodesignale (comp) umfasst, wenn ein Anrufcodesignal (call) vom ersten peripheren System (A) gesendet wird;
- eine Vergleichsvorrichtung, die mit dem ersten peripheren System (A) verbindbar und mit dem Vergleichscodesignal-Generator (GEN) und mit der Schaltvorrichtung (SWTCH) verbunden ist und Mittel (COMP) umfasst zum Vergleichen des Anrufcodesignals (call), das vom ersten peripheren System (A) herstammt, mit den Vergleichscodesignalen (comp), die vom Vergleichscodesignal-Generator (GEN) erzeugt wurden, und ebenfalls Mittel zum Erzeugen dieser Schaltsteuersignale (s) mit einem derartigen Wert, dass das Anrufcodesignal (call), das vom ersten peripheren System (A) herstammt, von der Schaltvorrichtung (SWTCH) nicht übertragen wird, wenn das Anrufcodesignal (call) ganz oder teilweise einem dieser Vergleichscodesignalen (comp) entspricht, und dass dieses Anrufcodesignal (call) tatsächlich übertragen wird, wenn das Anrufcodesignal (call) keinem dieser Vergleichscodesignalen (comp) entspricht.

## Revendications

1. Système de transmission comprenant un réseau de transmission (T) pour la transmission de signaux de transmission entre des systèmes périphériques (A, B1, B2, B3, B4) connectés audit réseau de transmission, dans lequel, avant la transmission des signaux de transmission entre un premier système périphérique (A) et un second système périphérique (B1, B2, B3, B4), ledit premier système périphérique (A) émet un signal codé d'appel (call) vers le réseau de transmission (T), lequel signal codé d'appel (call) comprend un code indiquant ledit second système périphérique (B1, B2, B3, B4), après quoi le réseau de transmission (T) ou le second système périphérique (B1, B2, B3, B4) envoie en retour un signal codé d'état "positif' ou "négatif', indiquant, respectivement, si ledit second système périphérique (B1, B2, B3, B4), est, ou n'est pas, accessible ou disponible ; caractérisé en ce qu'au moins un dispositif de filtrage (F) est raccordé au premier système périphérique (A) et au réseau de transmission (T), lequel dispositif de filtrage (F) comprend un moyen pour enregistrer (CONT) et pour mémoriser (MEM), pendant un temps de relaxation, des signaux codés de comparaison (comp) correspondant auxdits signaux codés d'appel (call) émis par ledit premier système périphérique (A), ou à une partie d'un tel signal codé d'appel (call), en réponse auxquels le réseau de transmission (T) a envoyé en retour un signal codé d'état "négatif' indiquant "inaccessible", ou en réponse auxquels le second système périphérique (B1, 82, 83, 84) appelé a envoyé en retour un signal codé d'état "négatif' indiquant "indisponible", lequel dispositif de filtrage (F) comprend de plus un moyen (COMP) pour comparer un signal codé d'appel (call) émis par ledit premier système périphérique (A) aux signaux codés de comparaison (comp) alors enregistrés et pour ne pas transmettre ledit signal codé d'appel (call) dans le cas où il apparaît, au cours de ladite comparaison, une correspondance entre ledit signal codé d'appel (call), ou une partie de celui-ci, et l'un desdits signaux codés de comparaison (comp), mais pour transmettre ledit signal codé d'appel (call) dans le cas où il n'apparaît pas, au cours de ladite comparaison, de correspondance entre ledit signal codé d'appel (call), ou une partie de celui-ci, et l'un desdits signaux codés de comparaison (comp), ledit dispositif de filtrage (F) étant conçu pour ajuster le temps de relaxation.

2. Système de transmission selon la revendication 1, caractérisé par une multiplicité desdits dispositifs de filtrage (F1, F2, F3), chaque dispositif de filtrage (F1, F2, F3) se rapportant à une section (T1, T2, T3) du réseau de transmission (T), et également par un dispositif de sélection de filtre (SEL), connecté, d'une part, au premier système périphérique (A) et, d'autre part, à chacun desdits dispositifs de filtrage (F1, F2, F3), et comprenant un moyen pour recevoir les signaux codés d'appel (call) émis par le premier système périphérique (A) et pour, sur la base d'un tel signal codé d'appel (call), sélectionner et connecter au premier système périphérique (A) le dispositif de filtrage (F1, F2, F3) qui se rapporte à ladite section (T1, T2, T3) du réseau de transmission à laquelle est connecté le second système périphérique (B1, B2, B3, B4) désigné par le code d'appel (call).

3. Système de transmission selon la revendication 1 ou 2, caractérisé en ce que le temps de relaxation (t) affecté à un signal codé de comparaison (comp) particulier est d'autant plus long que le nombre de signaux codés d'appel (call), émis par le premier système périphérique (A) et correspondant audit signal codé de comparaison (comp), est plus grand.

4. Système de transmission selon la revendication 1 ou 2, caractérisé en ce que le temps de relaxation (t) affecté à un signal codé de comparaison (comp) particulier est d'autant plus long que le nombre de signaux codés d'état "négatifs", reçus en retour après l'émission de signaux codés d'appel (call) correspondant audit signal codé de comparaison (comp) provenant du réseau de transmission (T) ou du second système périphérique (B1, B2, B3, B4), est plus grand.

5. Système de transmission selon la revendication 1 ou 2, caractérisé en ce que le temps de relaxation (t) affecté à un signal codé de comparaison (comp) particulier se termine après la réception d'un signal codé d'état "positif", provenant du second système périphérique (B1, B2, b3, B4) désigné par le signal codé d'appel (call) correspondant audit signal codé de comparaison (comp), et indiquant que ledit second système périphérique (B1, B2, B3, B4) est de nouveau disponible.

6. Système de transmission selon la revendication 1 ou 2, caractérisé en ce qu'au moins un dispositif de filtrage (F, F1, F2, F3) enregistre des signaux codés de comparaison (comp) qui correspondent à des signaux codés d'appel (call) émis par le premier système périphérique (A), en réponse auxquels, un code d'état "négatif' indiquant "inaccessible" ou "indisponible" a été reçu en retour un nombre particulier de fois du réseau de transmission (T) ou des seconds systèmes périphériques appelés (B1, B2, B3, B4), au cours d'un certain temps de détection.

7. Système de transmission selon la revendication 6, caractérisé en ce que ledit temps de détection est égal audit temps de relaxation (t).

8. Système de transmission selon la revendication 1 ou 2, caractérisé en ce que les signaux codés d'état envoyés en retour contiennent non seulement une indication se rapportant à l'accessibilité à la disponibilité du second système périphérique appelé (B1, B2, B3, B4), mais également un code correspondant au signal codé d'appel (call) respectif, et en ce que ledit code est enregistré dans au moins un dispositif de filtrage (F, F1, F2, F3) comme code de comparaison dans le cas de l'inaccessibilité ou de l'indisponibilité du second système périphérique appelé (B1, B2, B3, B4).

9. Système de transmission selon la revendication 1 ou 2, caractérisé en ce que les signaux codés d'état envoyés en retour contiennent non seulement une indication se rapportant à l'accessibilité à la disponibilité du second système périphérique appelé mais également, dans le cas d'un signal codé d'état "négatif" un code de localisation d'erreur indiquant la localisation dans le réseau de transmission (T), ou dans le second système périphérique (B1, B2, B3, B4), à partir de laquelle le signal codé d'état (négatif) est envoyé en retour, et en ce que ledit code de localisation d'erreur est enregistré, comme code de comparaison, dans au moins un dispositif de filtrage (F, F1, F2, F3).

10. Système de transmission selon la revendication 1 ou 2, caractérisé en ce que les signaux codés de comparaison (comp) sont mémorisés dans au moins un dispositif de filtrage (F, F1, F2, F3) dans leur séquence chronologique d'enregistrement dans ledit dispositif de filtrage (F, F1, F2, F3).

11. Système de transmission selon la revendication 1 ou 2, caractérisé en ce qu'au moins un dispositif de filtrage (F, F1, F2, F3) est pourvu:
d'un dispositif de commutation (SWTCH) connecté au premier système périphérique (A) et au réseau de transmission (T) et comprenant un moyen pour transmettre, ou ne pas transmettre, un signal codé d'appel (call) du premier système périphérique (A) au réseau de transmission (T) sous les ordres d'un signal de commande de commutation (s) ;
un générateur de signaux codés de comparaison (GEN) qui comprend le moyen pour enregistrer (CONT) comme signaux codés de comparaison (comp) et pour mémoriser (MEM), pendant un temps de relaxation (t), des codes de comparaison qui correspondent auxdits codes d'appel envoyés auxdits seconds systèmes périphériques (B1, B2, B3, B4), ou à une section d'un tel code d'appel, en réponse auxquels un signal codé d'état "négatif" indiquant "inaccessible" ou "indisponible" a été reçu en retour du réseau de transmission (T) ou du second système périphérique appelé (B1, B2, B3, B4), lequel générateur de signaux codés de comparaison (GEN), comprend en outre un moyen pour produire les signaux codés de comparaison (comp) alors enregistrés lorsqu'un signal codé d'appel (call) est émis par le premier système périphérique (A) ;
un dispositif de comparaison connecté au premier système périphérique (A), au générateur de signaux de comparaison (GEN) et au dispositif de commutation (SWTCH), et comprenant le moyen de comparaison (COMP) pour comparer le signal codé d'appel (call) ayant pour origine le premier système périphérique (A) aux signaux codés de comparaison (comp) produits par le générateur de signaux codés de comparaison (GEN), et également un moyen pour produire ledit signal de commande de commutation (s) avec une valeur telle que le signal codé d'appel (call) ayant pour origine le premier système périphérique (A) ne soit pas transmis par le dispositif de commutation (SWTCH) si le signal codé d'appel (call) correspond, totalement ou partiellement, à l'un desdits signaux codés de comparaison (comp), et une valeur telle que ledit signal codé d'appel (call) soit en fait transmis si le signal codé d'appel (call) ne correspond pas à l'un des signaux codés de comparaison (comp).

12. Filtre pour un système de transmission comprenant un réseau de transmission (T) pour la transmission de signaux de transmission entre des systèmes périphériques (A, B1, B2, B3, B4) connectés audit réseau de transmission, dans lequel système de transmission, avant la transmission des signaux de transmission entre un premier système périphérique (A) et un second système périphérique (B1, B2, B3, B4), ledit premier système périphérique (A) émet un signal codé d'appel (call) vers le réseau de transmission (T), lequel signal codé d'appel (call) comprend un code indiquant ledit second système périphérique (B1, B2, B3, B4), après quoi le réseau de transmission (T) ou le second système périphérique (B1, B2, B3, B4) envoie en retour un signal codé d'état "positif' ou "négatif", indiquant, respectivement, si ledit second système périphérique (B1, B2, B3, B4), est, ou n'est pas, accessible ou disponible ; caractérisé en ce que le dispositif de filtrage (F) peut être raccordé au premier système périphérique (A) et au réseau de transmission (T), lequel dispositif de filtrage (F) comprend un moyen (MEM) pour enregistrer et pour mémoriser, pendant un temps de relaxation, des signaux codés de comparaison (comp) correspondant auxdits signaux codés d'appel (call) émis par ledit premier système périphérique (A), ou à une partie d'un tel signal codé d'appel (call), en réponse auxquels le réseau de transmission (T) a envoyé en retour un signal codé d'état "négatif" indiquant "inaccessible", ou en réponse auxquels le second système périphérique (B1, B2, B3, B4) appelé a envoyé en retour un signal codé d'état "négatif' indiquant "indisponible", lequel dispositif de filtrage (F) comprend de plus un moyen (COMP) pour comparer un signal codé d'appel (call) émis par ledit premier système périphérique (A) aux signaux codés de comparaison (comp) alors enregistrés et pour ne pas transmettre ledit signal codé d'appel (call) dans le cas où il apparaît, au cours de ladite comparaison, une correspondance entre ledit signal codé d'appel (call), ou une partie de celui-ci, et l'un desdits signaux codés de comparaison (comp), mais pour transmettre ledit signal codé d'appel (call) dans le cas où il n'apparaît pas, au cours de ladite comparaison, de correspondance entre ledit signal codé d'appel (call), ou une partie de celui-ci, et l'un desdits signaux codés de comparaison (comp), ledit dispositif de filtrage (F) étant conçu pour ajuster le temps de relaxation.

13. Dispositif de filtrage (F) selon la revendication 12, caractérisé par une multiplicité desdits dispositifs de filtrage (F1, F2, F3), chaque dispositif de filtrage (F1, F2, F3) se rapportant à une section (T1, T2, T3) du réseau de transmission (T), et également par un dispositif de sélection de filtre (SEL), pouvant être connecté, d'une part, au premier système périphérique (A) et connecté, d'autre part, à chacun desdits dispositifs de filtrage (F1, F2, F3), et comprenant un moyen pour recevoir les signaux codés d'appel (call) émis par le premier système périphérique (A) et pour, sur la base d'un tel signal codé d'appel (call), sélectionner et connecter au premier système périphérique (A) le dispositif de filtrage (F1, F2, F3) qui se rapporte à ladite section (T1, T2, T3) du réseau de transmission à laquelle est connecté le second système périphérique (B1, B2, B3, B4) désigné par le code d'appel (call).

14. Dispositif de filtrage (F, F1, F2, F3) selon la revendication 12 ou 13, caractérisé en ce qu'il est pourvu :
d'un dispositif de commutation (SWTCH) pouvant être connecté au premier système périphérique (A) et au réseau de transmission (T) et comprenant un moyen pour transmettre, ou ne pas transmettre, un signal codé d'appel (call) du premier système périphérique (A) au réseau de transmission (T) sous les ordres d'un signal de commande de commutation (s) ;
d'un générateur de signaux codés de comparaison (GEN) qui comprend le moyen pour enregistrer (CONT) comme signaux codés de comparaison (comp) et pour mémoriser (MEM), pendant un temps de relaxation (t), des codes de comparaison qui correspondent auxdits codes d'appel envoyés auxdits seconds systèmes périphériques (B1, B2, B3, 84), ou à une section d'un tel code d'appel, en réponse auxquels un signal codé d'état "négatif" indiquant "inaccessible" ou "indisponible" a été reçu en retour du réseau de transmission (T) ou du second système périphérique appelé (B1, B2, B3, B4), lequel générateur de signaux codés de comparaison (GEN), comprend en outre un moyen pour produire les signaux codés de comparaison (comp) alors enregistrés lorsqu'un signal codé d'appel (call) est émis par le premier système périphérique (A) ;
d'un dispositif de comparaison pouvant être connecté au premier système périphérique (A), et connecté au générateur de signaux de comparaison (GEN) et au dispositif de commutation (SWTCH), et comprenant le moyen de comparaison (COMP) pour comparer le signal codé d'appel (call) ayant pour origine le premier système périphérique (A) aux signaux codés de comparaison (comp) produits par le générateur de signaux codés de comparaison (GEN), et également un moyen pour produire ledit signal de commande de commutation (s) avec une valeur telle que le signal codé d'appel (call) ayant pour origine le premier système périphérique (A) ne soit pas transmis par le dispositif de commutation (SWTCH) si le signal codé d'appel (call) correspond, totalement ou partiellement, à l'un desdits signaux codés de comparaison (comp), et une valeur telle que ledit signal codé d'appel (call) soit en fait transmis si le signal codé d'appel (call) ne correspond pas à l'un des signaux codés de comparaison (comp).
